# EUROPÄISCHE PATENTANMELDUNG

(11) **EP 2 770 135 A1**
(43) Veröffentlichungstag der Anmeldung: **27.08.2014**
(21) Anmeldenummer: 13196729.1
(22) Anmeldetag: 11.12.2013
(51) Int. Cl.: E04F 13/073, E04F 15/18, E04C 2/40, B32B 3/02, B32B 3/30, E04B 1/66, E04D 13/14, E04B 1/62

(54) **Abdichtungsbahn**

(30) Priorität: 20.02.2013 DE 102013101653
(71) Anmelder: Schlüter-Systems KG, 58640 Iserlohn (DE)
(72) Erfinder: Schlüter, Werner, 58644 Iserlohn (DE)
(74) Vertreter: Schröter & Albrecht

(57) **Zusammenfassung**

Die Erfindung betrifft eine Abdichtungsbahn (1; 7) umfassend eine wasserdichte Schicht (2; 8); eine selbstklebende Haftschicht oder eine Vlies- oder Gewebeschicht (3; 9), die an der Unterseite der wasserdichten Schicht (2; 8) vorgesehen ist; und eine Vlies- oder Gewebeschicht (4; 10), die an der Oberseite der wasserdichten Schicht (2; 8) vorgesehen ist; wobei die Abdichtungsbahn (1; 7) entlang einer ihrer langen Seitenkanten mit einer Vielzahl von lappenartig ausgebildeten Vorsprüngen (5; 11) versehen ist, die jeweils durch Aussparungen (6; 12) voneinander getrennt sind.

## Beschreibung

Die vorliegende Erfindung betrifft eine Abdichtungsbahn mit einer wasserdichten Schicht, einer selbstklebenden Haftschicht oder einer Vlies- oder Gewebeschicht, die an der Unterseite der wasserdichten Schicht vorgesehen ist, und einer Vlies- oder Gewebeschicht, die an der Oberseite der wasserdichten Schicht vorgesehen ist.

Derartige Abdichtungsbahnen werden als Abdichtung und Dampfsperre im Verbund mit einem Fliesenbelag verlegt. Anwendungsgebiete sind beispielsweise Nassräume, Schwimmhallen, Wellnessbereiche sowie Industriebereiche mit erhöhter Luftfeuchte. Die an der Unterseite der wasserdichten Schicht vorgesehene selbstklebende Haftschicht dient zur Fixierung der Abdichtungsbahn an einem Untergrund. Alternativ kann eine Vlies- oder Gewebeschicht vorgesehen sein, mit der die Abdichtungsbahn unter Verwendung eines Fliesenklebers am Untergrund fixiert werden kann. Der Fliesenkleber dringt in die Vlies- oder Gewebeschicht ein und verkrallt sich in dieser, so dass die Abdichtungsbahn nach dem Trocknen des Fliesenklebers fest mit dem Untergrund verbunden ist. Auf der Oberseite der Abdichtungsbahn werden Fliesen im Dünnbettverfahren unter Verwendung eines geeigneten Fliesenklebers verlegt. Auch hier dient die an der Oberseite der wasserdichten Schicht angeordnete Vlies- oder Gewebeschicht zum Verkrallen des Fliesenklebers.

Soll ein Übergang zwischen zwei sich quer, insbesondere senkrecht zueinander erstreckenden Flächen abgedichtet werden, wie beispielsweise der Übergang zwischen einem Fußboden und einer Wand, so wird die Abdichtungsbahn einfach geknickt und an beiden Flächen fixiert. Probleme treten allerdings dann auf, wenn eine der beiden Flächen eine Innen- und/oder Außenrundung aufweist, wie beispielsweise im Falle einer auf einem Untergrund stehenden Säule, einer gerundeten Duschwand oder dergleichen, da die Abdichtungsbahn aufgrund der Rundung Falten wirft, was sowohl die ordnungsgemäße Fixierung der Abdichtungsbahn als auch die sich anschließenden Fliesenverlegearbeiten erheblich erschwert.

Ausgehend von diesem Stand der Technik ist es eine Aufgabe der vorliegenden Erfindung, eine Abdichtungsbahn der eingangs genannten Art zu schaffen, die speziell dafür ausgelegt ist, einen Übergang zwischen zwei sich quer, insbesondere senkrecht zueinander erstreckenden Flächen abzudichten, von denen eine Fläche eine Innen- und/oder Außenrundung aufweist.

Zur Lösung dieser Aufgabe schafft die vorliegende Erfindung eine Abdichtungsbahn der eingangs genannten Art, die dadurch gekennzeichnet ist, dass sie entlang einer ihrer langen Seitenkanten mit einer Vielzahl von lappenartig ausgebildeten Vorsprüngen versehen ist, die jeweils durch Aussparungen voneinander getrennt sind. Dank solcher durch Aussparungen voneinander getrennter Vorsprünge kann die erfindungsgemäße Abdichtungsbahn problemlos entlang einer Innen- und/oder Außenrundung geführt werden, ohne dass es zu einer Faltenbildung kommt. Entsprechend sind keine Beeinträchtigungen bei der ordnungsgemäßen Fixierung der Abdichtungsbahn und bei den sich anschließenden Fliesenverlegearbeiten zu befürchten.

Die wasserdichte Schicht ist bevorzugt aus einem weich eingestellten Kunststoff hergestellt, insbesondere aus weich eingestelltem Polyethylen. Ein weich eingestellter Kunststoff verleiht der Abdichtungsbahn eine Elastizität und Flexibilität, welche ihre Handhabung erleichtert.

Die Vorsprünge sind entlang der Seitenkante vorteilhaft in regelmäßigen Abständen angeordnet, was sowohl die Herstellung als auch das Verlegen der Abdichtungsbahn erleichtert.

Gemäß einer Ausgestaltung der vorliegenden Erfindung sind die Aussparungen bezüglich ihrer Form und Abmessungen identisch ausgebildet, was sich ebenfalls positiv auf die Herstellung und Handhabung der Abdichtungsbahn auswirkt.

Die Vorsprünge erstrecken sich bevorzugt über 1/4 bis 3/4 der Breite der Abdichtungsbahn, was zu einer guten Handhabbarkeit der Abdichtungsbahn führt.

Die Breite der Abdichtungsbahn liegt vorteilhaft im Bereich zwischen 80 und 400 mm. Mit einer solchen Breite lassen sich die meisten Anwendungsfälle bearbeiten, so dass die Abdichtungsbahn flexibel für unterschiedlichste Anwendungsfälle einsetzbar ist.

Die Aussparungen weisen gemäß einer Ausgestaltung der vorliegenden Erfindung eine mehreckige Form auf, insbesondere eine dreieckige oder eine trapezförmige Form. Dies führt dazu, dass sich die Vorsprünge in Auswärtsrichtung verjüngen, was sich positiv auf die Handhabbarkeit der Abdichtungsbahn auswirkt, wie es in der nachfolgenden Beschreibung noch näher erläutert ist. Der Begriff "mehreckig" soll vorliegend auch eine im Wesentlichen mehreckige Form einschließen, deren Eckbereiche zumindest teilweise mit Übergangsradien bzw. Rundungen versehen sind.

Die Vorsprünge und die Aussparungen sind bezüglich ihrer Form und Abmessungen vorteilhaft identisch ausgebildet, was dazu führt, dass sich die Abdichtungsbahn sehr einfach herstellen lässt.

Bei dem Verfahren zur Herstellung von mit identischen Vorsprüngen und Aussparungen versehenen Abdichtungsbahnen der Anzahl n, wobei n einem ganzzahligen Vielfachen der Zahl 2 entspricht, wird in einem ersten Schritt eine Ausgangsabdichtungsbahn bereitgestellt. Diese Ausgangsabdichtungsbahn umfasst eine längliche wasserdichte Schicht, eine selbstklebende Haftschicht oder eine Vlies-oder Gewebeschicht, die an der Unterseite der wasserdichten Schicht vorgesehen ist, und eine Vlies- oder Gewebeschicht, die an der Oberseite der wasserdichten Schicht vorgesehen ist. In einem weiteren Schritt werden die Aussparungen und die Vorsprünge durch Einbringen von n/2 entsprechend konturierter Schnittlinien in die Ausgangsabdichtungsbahn mittels verschnittfreiem Stanzen oder Schneiden hergestellt. Die verschnittfreie Bearbeitung ist möglich, da aufgrund der identischen Ausbildung der Vorsprünge und der Aussparungen während des Stanzens oder Schneidens stets sowohl ein Abschnitt eines Vorsprungs der einen Bahn als auch ein Abschnitt einer Aussparung der anderen Bahn erzeugt wird.

Wenn die Anzahl n größer als 2 ist, wird zwischen zwei benachbarten konturierten Schnittlinien mittels verschnittfreiem Stanzen oder Schneiden in einem weiteren Schritt jeweils eine Trennlinie eingebracht, um die noch zusammenhängenden Abdichtungsbahnen voneinander zu trennen, wobei die Trennlinie zur Herstellung von Abdichtungsbahnen gleicher Breite B insbesondere mittig zwischen zwei benachbarten konturierten Schnittlinien verläuft.

Beim Herstellen der Aussparungen und der Vorsprünge mittels Stanzen oder Schneiden können manuell durchtrennbare Verbindungsstege belassen werden, was dazu führt, dass jeweils zwei Abdichtungsbahnen auch nach dem Stanzen oder Schneiden weiterhin miteinander verbunden bleiben, was in Bezug auf die Verpackung und den Transport der Abdichtungsbahnen von Vorteil sein kann. Die Stege können dann vor Ort von einem Fliesenleger manuell durchtrennt werden, beispielsweise zerrissen werden, um die Abdichtungsbahnen anschließend einzeln zu verarbeiten.

Die vorliegende Erfindung schafft ferner eine Abdichtungsbahnanordnung mit zwei übereinander angeordneten und aneinander befestigten Abdichtungsbahnen gemäß der vorliegenden Erfindung, wobei die Abdichtungsbahnen in Längsrichtung derart versetzt zueinander angeordnet sind, dass die Vorsprünge der einen Abdichtungsbahn die Aussparungen der anderen Abdichtungsbahn zumindest teilweise verdecken. Auf diese Weise wird eine ordnungsgemäße und vollständige Abdichtung des Übergangs zweier abzudichtender Flächen erzielt.

Bevorzugt dichtet die Abdichtungsbahnanordnung einen Übergang zwischen einer eine Innen- und/oder Außenrundung aufweisenden Fläche, insbesondere in Form einer gerundeten Wand oder einer gerundeten Säule, und einem sich quer zu dieser erstreckenden Untergrund ab.

Weitere Merkmale und Vorteile der vorliegenden Erfindung werden anhand der nachfolgenden Beschreibung unter Bezugnahme auf die beiliegende Zeichnung deutlich. Darin ist
- Figur 1: eine schematische Draufsicht einer Abdichtungsbahn gemäß einer ersten Ausführungsform der vorliegenden Erfindung;
- Figur 2: eine Seitenansicht der in Figur 1 dargestellten Abdichtungsbahn;
- Figur 3: eine schematische Draufsicht einer Abdichtungsbahn gemäß einer zweiten Ausführungsform der vorliegenden Erfindung;
- Figur 4: eine Seitenansicht der in Figur 3 dargestellten Abdichtungsbahn;
- Figur 5: eine schematische Draufsicht einer Ausgangsabdichtungsbahn, aus der mittels Stanzen oder Schneiden vier der in den Figuren 3 und 4 dargestellten Abdichtungsbahnen hergestellt werden;
- Figur 6: eine schematische perspektivische Ansicht einer Abdichtungsanordnung, bei der eine erste Abdichtungsbahn der in den Figuren 3 und 4 dargestellte Art im Übergangsbereich zwischen einer Säule und einem Untergrund befestigt ist, und
- Figur 7: eine schematische perspektivische Ansicht, gemäß der auf der in Figur 6 dargestellten ersten Abdichtungsbahn eine zweite Abdichtungsbahn befestigt ist.

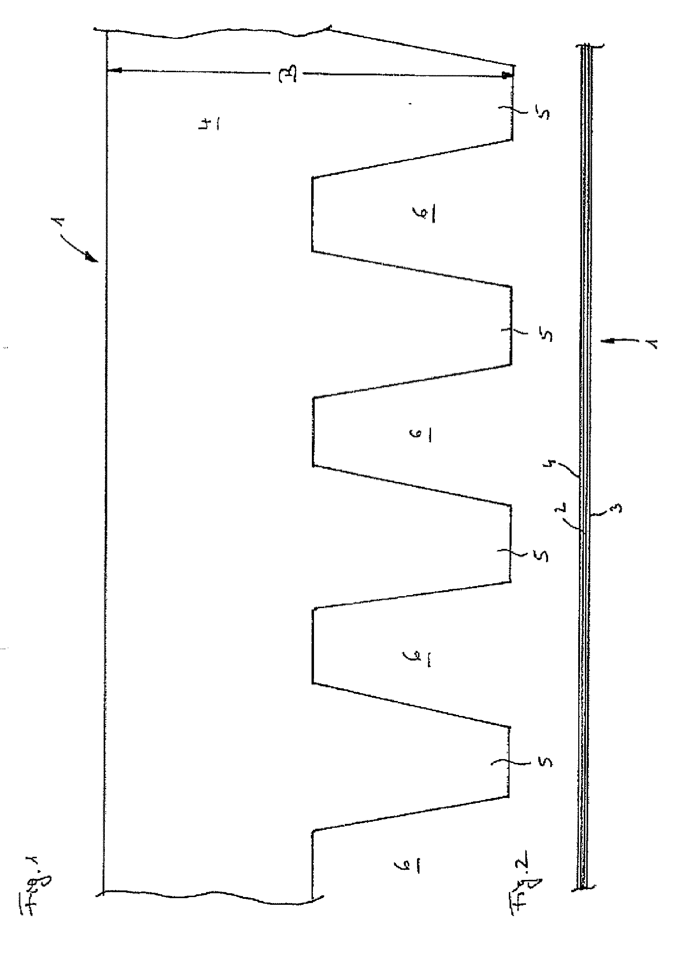

Die Figuren 1 und 2 zeigen eine Abdichtungsbahn 1 gemäß einer Ausführungsform der vorliegenden Erfindung. Die Abdichtungsbahn 1 hat eine Breite B, die im Bereich zwischen 80 und 400 mm liegt, und weist durchgehend einen dreischichtigen Aufbau auf, wobei die Schichten übereinander angeordnet und fest miteinander verbunden sind. Mittig angeordnet ist eine wasserdichte Schicht 2, die aus einem weich eingestellten Kunststoff hergestellt ist, wie beispielsweise aus weich eingestelltem Polyethylen. An der Unterseite der wasserdichten Schicht 2 ist eine Vlies- oder Gewebeschicht 3 befestigt. Alternativ zur Vlies- oder Gewebeschicht 3 kann eine selbstklebende Haftschicht vorgesehen sein, die zum Schutz mit einer abziehbaren Abdeckschicht aus Kunststoff oder dergleichen bedeckt ist. An der Oberseite der wasserdichten Schicht 2 ist eine Vlies- oder Gewebeschicht 4 vorgesehen. Entlang einer ihrer einander gegenüber angeordneten, sich parallel zueinander erstreckenden Seitenkanten ist die Abdichtungsbahn 1 mit einer Vielzahl von lappenartig ausgebildeten Vorsprüngen 5 versehen, die jeweils durch Aussparungen 6 voneinander getrennt sind. Die Vorsprünge 5 und die Aussparungen 6 sind in regelmäßigen Abständen entlang der Seitenkante angeordnet und bezüglich ihrer trapezförmigen Formen und Abmessungen identisch ausgebildet. Die Vorsprünge 5 erstrecken sich vorliegend über die Hälfte der Breite B der Abdichtungsbahn 1. Alternativ können sich die Vorsprünge 5 aber auch im Bereich zwischen 1/4 bis 3/4 der Breite B der Abdichtungsbahn 1 erstrecken.

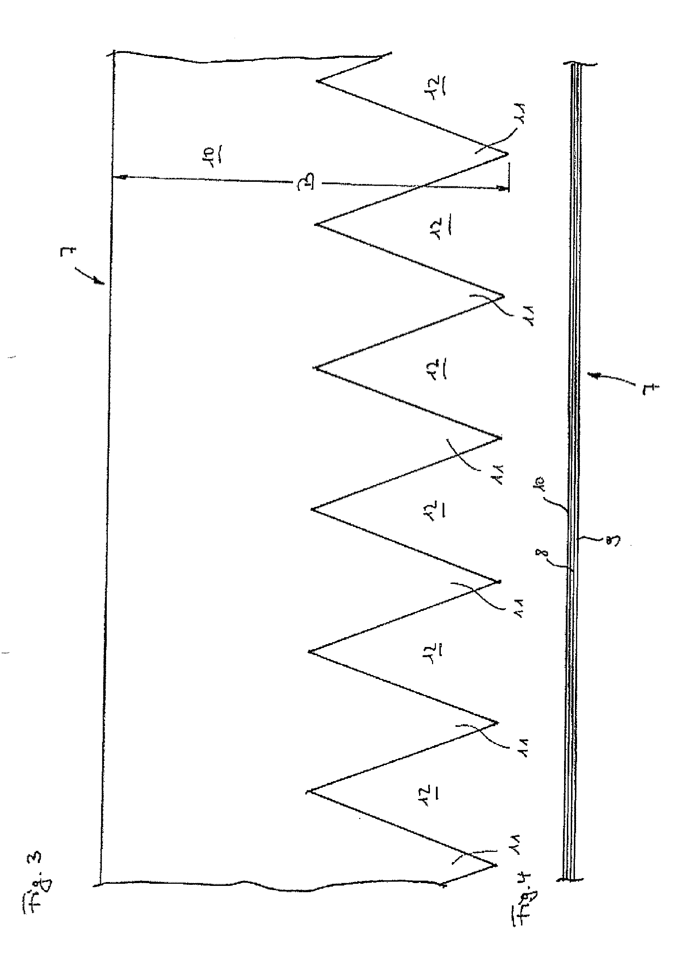

Die Figuren 3 und 4 zeigen eine Abdichtungsbahn 7 gemäß einer zweiten Ausführungsform der vorliegenden Erfindung, deren schichtförmiger Aufbau demjenigen der in den Figuren 1 und 2 dargestellten Abdichtungsbahn 1 entspricht. Somit weist auch die Abdichtungsbahn 7 eine wasserdichte Schicht 8 auf, die jeweils an ihrer Oberseite und an ihrer Unterseite mit einer Vlies- oder Gewebeschicht 9, 10 versehen ist. Entlang einer ihrer beiden langen, parallel zueinander angeordneten Seitenkanten ist die Abdichtungsbahn 7 mit einer Vielzahl von lappenartig ausgebildeten Vorsprüngen 11 versehen, die jeweils durch Aussparungen 12 voneinander getrennt sind. Die Vorsprünge 11 und die Aussparungen 12 sind in gleichmäßigen Abständen entlang der Seitenkante angeordnet und sind bezüglich ihrer dreieckigen Form und bezüglich ihrer Abmessungen identisch ausgebildet. Die Vorsprünge 11 erstrecken sich über die Hälfte der Breite B der Abdichtungsbahn 7, wobei auch hier die Breite B im Bereich von 80 bis 400 mm liegt. Alternativ können sich die Vorsprünge 11 auch in einem Bereich von 1/4 bis 3/4 der Breite B der Abdichtungsbahn 7 erstrecken.

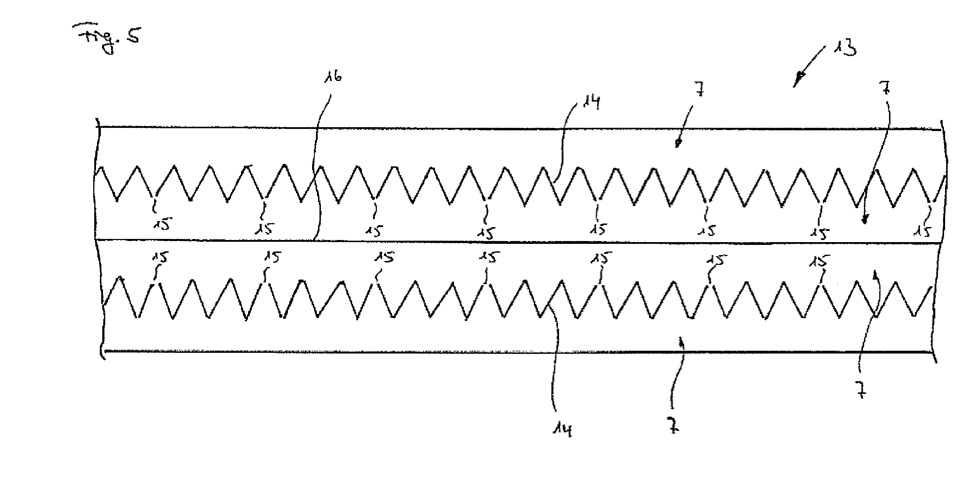

Figur 5 zeigt ein Verfahren zur Herstellung von vier (n=4) Abdichtungsbahnen 7. In einem ersten Schritt wird eine Ausgangsabdichtungsbahn 13 bereitgestellt, die aus der wasserdichten Schicht 8 und den beiden Vlies- oder Gewebeschichten 9, 10 besteht und eine Breite aufweist, die der dreifachen Breite B einer einzelnen Abdichtungsbahn 7 entspricht. In einem weiteren Schritt werden mittels Stanzen oder Schneiden zum einen zwei (n/2) konturierte Schnittlinien 14 zur Herstellung der Vorsprünge 11 und der Aussparungen 12 der jeweiligen Abdichtungsbahnen 7 in die Ausgangsabdichtungsbahn 13 eingebracht. Dabei werden einige Verbindungsstege 15 belassen, die zwei benachbarte, durch die Schnittlinien 14 im Wesentlichen voneinander getrennte Abdichtungsbahnen 7 weiterhin miteinander verbinden. Zum anderen wird in die Ausgangsabdichtungsbahn 13 eine Trennlinie 16 mittels Stanzen oder Schneiden eingebracht. Auf diese Weise werden insgesamt vier Abdichtungsbahnen 7 hergestellt, wobei jeweils zwei Abdichtungsbahnen 7 über die Verbindungsstege 15 zusammengehalten werden. Die miteinander verbundenen Abdichtungsbahnen 7 können in einem weiteren Schritt auf Länge geschnitten und anschließend aufgerollt werden. Im aufgerollten Zustand können sie dann zum Verarbeitungsort verbracht werden. Vor der Montage können die über die Verbindungsstege 15 zusammengehaltenen Abdichtungsbahnen 7 dann getrennt werden, wozu die Verbindungsstege 15 beispielsweise manuell zerrissen werden.

Es sollte klar sein, dass auf die Herstellung der Verbindungsstege 15 auch verzichtet werden kann. In diesem Fall werden dann vier separate, nicht miteinander Verbundene Abdichtungsbahnen 7 erzeugt. Ferner sollte klar sein, dass die Anzahl n von Abdichtungsbahnen 7 auch jedes ganzzahlige Vielfache der Zahl 2 aufweisen kann, also n=2, 4, 6, 8, etc.

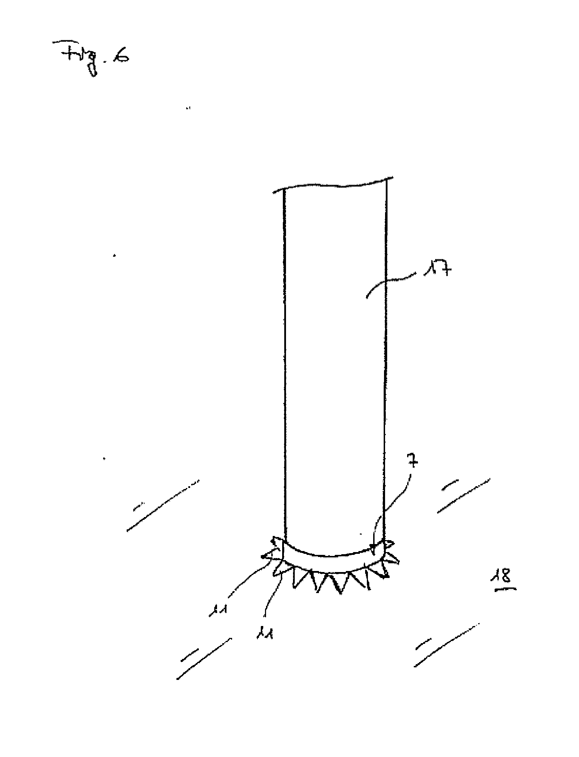

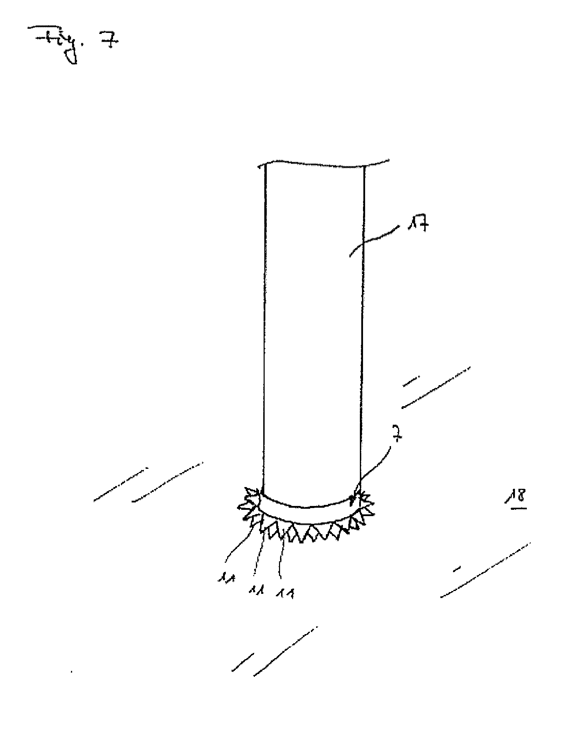

Die Figuren 6 und 7 zeigen eine Abdichtungsbahnanordnung, mit der beispielhaft ein Übergang zwischen einer gerundeten Fläche einer senkrechten Säule 17 und einem waagerechten Untergrund 18 abgedichtet wird. In einem ersten Verfahrensschritt wird auf der Säule und auf dem Untergrund ein Fliesenkleber aufgetragen. Daraufhin wird eine erste Abdichtungsbahn 7 derart auf den Untergrund 18 und die Säule 17 geklebt, dass die Vorsprünge 11 am Untergrund 18 und die restlichen Bereiche der Abdichtungsbahn 7 an der Säule 17 fixiert werden. Anschließend wird die Abdichtungsbahn 7 dann auf Länge geschnitten, so dass sich die in Figur 6 dargestellte Anordnung ergibt. In einem weiteren Schritt wird auf der ersten Abdichtungsbahn 7 und auf dem Untergrund 18 eine weitere Schicht Fliesenkleber aufgetragen. Daraufhin wird eine zweite Abdichtungsbahn 7 in Längsrichtung derart versetzt auf die erste Abdichtungsbahn 7 geklebt, dass die Vorsprünge 11 der einen Abdichtungsbahn 7 die Aussparungen 12 der anderen Abdichtungsbahn 7 zumindest teilweise verdecken. Nach Ablängen der zweiten Abdichtungsbahn 7 ergibt sich dann die in Figur 7 dargestellte Anordnung. Wie es in Figur 7 zu erkennen ist, ist der Übergang zwischen der Säule 17 und dem Untergrund 18 nunmehr abgedichtet. In einem weiteren Schritt kann dann der Untergrund 18 mit herkömmlichen Abdichtungsbahnen versehen werden, wobei diese die verbliebenen Bereiche der Aussparungen 12 der Abdichtungsbahnen 7 verdecken, wodurch eine vollständige Abdichtung erzielt wird. Ebenso kann die Säule 17 zwecks Abdichtung mit herkömmlichen Abdichtungsbahnen verkleidet werden. In einem weiteren Schritt wird schließlich auf der Abdeckung bzw. auf den Abdeckungen ein Fliesenbelag verlegt.

### BEZUGSZEICHENLISTE

- 1: Abdichtungsbahn
- 2: Wasserdichte Schicht
- 3: Vlies- oder Gewebeschicht
- 4: Vlies- oder Gewebeschicht
- 5: lappenartig ausgebildete Vorsprünge
- 6: Aussparungen
- 7: Abdichtungsbahn
- 8: Wasserdichte Schicht
- 9: Vlies- oder Gewebeschicht
- 10: Vlies- oder Gewebeschicht
- 11: lappenartig ausgebildete Vorsprünge
- 12: Aussparungen
- 13: Ausgangsabdichtungsbahn
- 14: Schnittlinien
- 15: Verbindungsstege
- 16: Trennlinie
- 17: Säule
- 18: Untergrund

## Patentansprüche

1. Abdichtungsbahn (1; 7) umfassend
- eine wasserdichte Schicht (2; 8);
- eine selbstklebende Haftschicht oder eine Vlies- oder Gewebeschicht (3; 9), die an der Unterseite der wasserdichten Schicht (2; 8) vorgesehen ist; und
- eine Vlies- oder Gewebeschicht (4; 10), die an der Oberseite der wasserdichten Schicht (2; 8) vorgesehen ist;
wobei die Abdichtungsbahn (1; 7) entlang einer ihrer langen Seitenkanten mit einer Vielzahl von lappenartig ausgebildeten Vorsprüngen (5; 11) versehen ist, die jeweils durch Aussparungen (6; 12) voneinander getrennt sind.

2. Abdichtungsbahn (1; 7) nach Anspruch 1, **dadurch gekennzeichnet, dass** die wasserdichte Schicht (2; 8) aus einem weich eingestellten Kunststoff hergestellt ist, insbesondere aus weich eingestelltem Polyethylen.

3. Abdichtungsbahn (1; 7) nach einem der vorhergehenden Ansprüche, **dadurch gekennzeichnet, dass** die Vorsprünge (5; 11) entlang der Seitenkante in regelmäßigen Abständen angeordnet sind.

4. Abdichtungsbahn (1; 7) nach einem der vorhergehenden Ansprüche, **dadurch gekennzeichnet, dass** die Aussparungen (6; 12) bezüglich ihrer Form und Abmessungen identisch ausgebildet sind.

5. Abdichtungsbahn (1; 7) nach einem der vorhergehenden Ansprüche, **dadurch gekennzeichnet, dass** sich die Vorsprünge (5; 11) über 1/4 bis 3/4 der Breite (B) der Abdichtungsbahn (1; 7) erstrecken.

6. Abdichtungsbahn (1; 7) nach einem der vorhergehenden Ansprüche, **dadurch gekennzeichnet, dass** die Breite (B) der Abdichtungsbahn (1; 7) im Bereich zwischen 80 und 400 mm liegt.

7. Abdichtungsbahn (1; 7) nach einem der vorhergehenden Ansprüche, **dadurch gekennzeichnet, dass** die Aussparungen (6; 12) eine mehreckige Form aufweisen, insbesondere eine dreieckige oder eine trapezförmige Form.

8. Abdichtungsbahn (1; 7) nach einem der vorhergehenden Ansprüche, **dadurch gekennzeichnet, dass** die Vorsprünge (5; 11) und die Aussparungen (6; 12) bezüglich ihrer Form und Abmessungen identisch ausgebildet sind.

9. Verfahren zur Herstellung von Abdichtungsbahnen (1; 7) der Anzahl n nach Anspruch 8, wobei n einem ganzzahligen Vielfachen der Zahl 2 entspricht, wobei das Verfahren die Schritte aufweist:
- Bereitstellen einer Ausgangsabdichtungsbahn (13) mit einer länglichen wasserdichten Schicht (2; 8), mit einer selbstklebenden Haftschicht oder einer Vlies- oder Gewebeschicht (3; 9), die an der Unterseite der wasserdichten Schicht (2; 8) vorgesehen ist, und mit einer Vlies- oder Gewebeschicht (4; 10), die an der Oberseite der wasserdichten Schicht (2; 8) vorgesehen ist;
- Herstellen der Aussparungen (6; 12) und der Vorsprünge (5; 11) durch Einbringen von n/2 entsprechend konturierter Schnittlinien (14) in die Ausgangsabdichtungsbahn (13) mittels verschnittfreiem Stanzen oder Schneiden;
- und, wenn n größer als 2 ist, Einbringen jeweils einer Trennlinie (16) zwischen zwei benachbarten konturierten Schnittlinien (14) mittels verschnittfreiem Stanzen oder Schneiden.

10. Verfahren nach Anspruch 9, bei dem beim Herstellen der Aussparungen (6; 12) und der Vorsprünge (5; 11) mittels Stanzen oder Schneiden manuell durchtrennbare Verbindungsstege (15) belassen werden.

11. Abdichtungsbahnanordnung mit zwei übereinander angeordneten und aneinander befestigten Abdichtungsbahnen (1; 7) nach einem der Ansprüche 1 bis 8, wobei die Abdichtungsbahnen (1; 7) in Längsrichtung derart versetzt zueinander angeordnet sind, dass die Vorsprünge (5; 11) der einen Abdichtungsbahn (1; 7) die Aussparungen (6; 12) der anderen Abdichtungsbahn (1; 7) zumindest teilweise verdecken.

12. Abdichtungsbahnanordnung nach Anspruch 11, **dadurch gekennzeichnet, dass** diese einen Übergang zwischen einer eine Innen- und/oder Außenrundung aufweisenden Fläche, insbesondere einer gerundeten Wand oder einer gerundeten Säule, und einem sich quer zu dieser erstreckenden Untergrund abdichtet.
